Europäisches Patentamt

European Patent Office

Office européen des brevets

(11) Veröffentlichungsnummer: **0 330 915**

**A2**

(19)

(12) **EUROPÄISCHE PATENTANMELDUNG**

(21) Anmeldenummer: 89102632.0

(22) Anmeldetag: 16.02.89

(51) Int. Cl.⁴: **G01K 3/00 , G01K 1/02**

(30) Priorität: 02.03.88 DE 3806704
08.04.88 DE 3811728

(43) Veröffentlichungstag der Anmeldung:
06.09.89 Patentblatt 89/36

(84) Benannte Vertragsstaaten:
CH DE FR GB LI SE

(71) Anmelder: **Buck, Robert**
**Vogelherdbogen 67**
**D-7992 Tettnang(DE)**

Anmelder: **Marhofer, Gerd**
**Beckmannsbusch 67**
**D-4300 Essen-Bredeney(DE)**

(72) Erfinder: **Buck, Robert**
**Vogelherdbogen 67**
**D-7992 Tettnang(DE)**
Erfinder: **Marhofer, Gerd**
**Beckmannsbusch 67**
**D-4300 Essen-Bredeney(DE)**

(74) Vertreter: **Gesthuysen, Hans Dieter, Dipl.-Ing.**
**et al**
**Patentanwälte Gesthuysen + von Rohr**
**Huyssenallee 15 Postfach 10 13 33**
**D-4300 Essen 1(DE)**

(54) **Strömungswächter.**

(57) Dargestellt und beschrieben ist eine Wärme-übergangsmeßeinrichtung, nämlich eine Strömungs-meßeinrichtung, mit einem Wärmeübergangsindika-tor, zu dem ein erstes Temperaturmeßelement, min-destens ein Heizelement und ein zweites Tempera-turmeßelement gehören, mit einer Auswerteschal-tung und mit einer Anzeigeeinheit (6), wobei die Auswerteschaltung mindestens einen Temperatur-bzw. Strömungsistwert liefert und durch die Auswerteschaltung mindestens ein Temperatur- bzw. Strömungsschwellwert vorgebbar ist und wobei der Tem-peraturbzw. Strömungsistwert auf der Anzeigeeinheit (6) darstellbar ist.

Mit der erfindungsgemäßen Wärmeübergangs-meßeinrichtung bzw. Strömungsmeßeinrichtung kann auch eine Aussage darüber gewonnen werden, wo sich der Temperatur- bzw. Strömungsistwert relativ zum Temperatur- bzw. Strömungsschwellwert befin-det. Dazu ist der Temperatur- bzw. Strömungs-schwellwert auf der Anzeigeeinheit (6) darstellbar.

Fig.1

## Wärmeübergangsmeßeinrichtung, insbesondere Strömungsmeßeinrichtung

Die Erfindung betrifft eine Wärmeübergangsmeßeinrichtung, insbesondere eine Strömungsmeßeinrichtung, mit einem Wärmeübergangsindikator, zu dem vorzugsweise ein erstes Temperaturmeßelement, mindestens ein Heizelement und ein zweites Temperaturmeßelement gehören, mit einer Auswerteschaltung und mit einer Anzeigeeinheit, wobei die Auswerteschaltung mindestens einen Temperatur-bzw. Stromungsistwert liefert und durch die Auswerteschaltung mindestens ein Temperatur- bzw. Strömungsschwellwert vorgebbar ist und wobei der Temperatur- bzw. Strömungsistwert auf der Anzeigeeinheit darstellbar ist.

Wärmeübergangsmeßeinrichtungen der in Rede stehenden Art, also insbesondere kalorimetrisch arbeitende Strömungsmeßeinrichtungen, sind seit langem und in vielen Ausführungsformen bekannt (vgl. z. B. die DE-OSen 24 47 617, 26 29 051, 32 13 902 und 32 22 046). Bei diesen Wärmeübergangsmeßeinrichtungen, im folgenden häufig auch Strömungsmeßeinrichtungen genannt, arbeitet man mit einer Differenztemperaturmessung. Das erste Temperaturmeßelement mißt eine durch das Heizelement und durch das strömende Medium bestimmte Temperatur, im folgenden Meßtemperatur genannt, während das zweite Temperaturmeßelement eine von dem Heizelement möglichst nicht oder in anderer Weise und durch das strömende Medium bestimmte Temperatur, im folgenden Referenztemperatur genannt, mißt. Zu Wärmeübergangsmeßeinrichtungen bzw. Strömungsmeßeinrichtungen der zuvor beschriebenen Art gehören also funktionsnotwendig das erste Temperaturmeßelement, das Heizelement und das zweite Temperaturmeßelement, eine Auswerteschaltung und eine Anzeigeeinheit.

Handelt es sich bei dem Medium, dessen Strömung gemessen bzw. überwacht werden soll, um ein Gas, so können die für die Funktion notwendigen Bauelemente - erstes Temperaturmeßelement, Heizelement und zweites Temperaturmeßelement - mehr oder weniger ungeschützt in den Gasstrom eingebracht werden. Soll jedoch die Strömung eines flüssigen Mediums überwacht werden, so können die für die Funktion notwendigen Bauelemente - erstes Temperaturmeßelement, Heizelement und zweites Temperaturmeßelement - nicht einfach in den Flüssigkeitsstrom eingebracht werden, vielmehr ist es dann erforderlich, diese Bauelemente geschützt in einem Gehäuse anzuordnen.

Bei einer in der Praxis bereits realisierten Wärmeübergangsmeßeinrichtung bzw. Strömungsmeßeinrichtung ist das Gehäuse abgesetzt ausgeführt (vgl. die DE-OS 32 13 902); im dünneren Teil des Gehäuses befindet sich das' erste Temperaturmeßelement und das Heizelement, während sich das zweite Temperaturmeßelement im dickeren Teil des Gehäuses, an seinem dem dünneren Teil zugewandten Ende, befindet. Das erste Temperaturmeßelement und das Heizelement sind in einer Aluminiumscheibe angeordnet; die Aluminiumscheibe stellt also die thermische Verbindung dar zwischen der Stirnseite des Gehäuses und einerseits dem Temperaturmeßelement und andererseits dem Heizelement. Das erste Temperaturmeßelement, das Heizelement und die Aluminiumscheibe sind mit einem thermisch gut leitenden Epoxydharz vergossen. Das zweite Temperaturmeßelement befindet sich in einem Abstand von ca. 1 cm von der Stirnseite des Gehäuses entfernt, ebenfalls mit einem thermisch gut leitenden Epoxydharz vergossen. Da die Wärme des Heizelements das zweite Temperaturmeßelement nicht erreichen soll, befindet sich zwischen dem Bereich, in dem das erste Temperaturmeßelement und das Heizelement angeordnet sind, und dem Bereich, in dem das zweite Temperaturmeßelement angeordnet ist, thermisch gut isolierendes Material.

Die zuvor beschriebene Strömungsmeßeinrichtung ist einerseits thermisch relativ träge, kann andererseits nur relativ aufwendig hergestellt werden. Folglich haben sich die Patentsucher bereits die Aufgabe gestellt, eine Wärmeübergangsmeßeinrichtung bzw. eine Strömungsmeßeinrichtung anzugeben, die einerseits thermisch relativ schnell reagieren kann und die andererseits weniger aufwendig hergestellt werden kann. Diese Wärmeübergangsmeßeinrichtung bzw. Strömungsmeßeinrichtung ist zunächst und im wesentlichen dadurch gekennzeichnet, daß das erste Temperaturmeßelement, das Heizelement und das zweite Temperaturmeßelement auf einer Seite einer elektrisch gut isolierenden, thermisch gut leitenden Trägerfolie aufgebracht sind und die Trägerfolie mit ihrer den Temperaturmeßelementen und dem Heizelement abgewandten Seite zumindest in den Bereichen, in denen die Temperaturmeßelemente und das Heizelement aufgebracht sind, mit dem Gehäuse in wärmeleitendem Kontakt gebracht sind. In bezug auf Einzelheiten dieser Wärmeübergangsmeßeinrichtung bzw. Strömungsmeßeinrichtung wird auf die DE-OS 37 13 981 verwiesen. Der Offenbarungsgehalt der DE-OS 37 13 981 wird hiermit ausdrücklich auch hier zum Offenbarungsgehalt gemacht.

Wie eingangs ausgeführt, gilt für die Wärmeübergangsmeßeinrichtung bzw. Strömungsmeßeinrichtung, von der die Erfindung ausgeht, daß die Auswerteschaltung mindestens einen Temperatur- bzw. Strömungsistwert liefert und durch die Auswerteschaltung mindestens ein Temperatur- bzw.

Strömungsschwellwert vorgebbar ist und daß der Temperatur- bzw. Strömungsistwert auf der Anzeigeeinheit darstellbar ist. Im übrigen wird vom Temperatur-bzw. Strömungsistwert beim Unterschreiten und/oder Überschreiten des Temperatur- bzw. Strömungsschwellwertes ein Temperatur- bzw. Strömungsfehlersignal abgeleitet.

Bei der bekannten Wärmeübergangsmeßeinrichtung bzw. Strömungsmeßeinrichtung, von der die Erfindung ausgeht, ist nachteilig, daß zwar der Temperatur- bzw. Strömungsistwert auf der Anzeigeeinheit dargestellt wird, daß auch dann, wenn der Temperatur- bzw. Strömungsistwert den Temperatur- bzw. Strömungsschwellwert unterschreitet und/oder überschreitet, ein Temperaturbzw. Strömungsfehlersignal abgeleitet wird, daß jedoch nicht erkennbar ist, wo sich der Temperatur- bzw. Strömungsistwert relativ zum Temperatur- bzw. Strömungsschwellwert befindet.

Der Erfindung liegt folglich die Aufgabe zugrunde, die eingangs beschriebene Wärmeübergangsmeßeinrichtung bzw. Strömungsmeßeinrichtung so auszugestalten und weiterzubilden, daß mit ihr auch eine Aussage darüber gewonnen werden kann, wo sich der Temperatur- bzw. Strömungsistwert relativ zum Temperatur- bzw. Strömungsschwellwert befindet.

Die erfindungsgemäße Wärmeübergangsmeßeinrichtung bzw. Strömungsmeßeinrichtung, bei der die zuvor hergeleitete und dargelegte Aufgabe gelöst ist, ist nun zunächst und im wesentlichen dadurch gekennzeichnet, daß der Temperatur-bzw. Strömungsschwellwert auf der Anzeigeeinheit darstellbar ist. Die erfindungsgemäße Wärmeübergangsmeßeinrichtung bzw. Strömungsmeßeinrichtung liefert also zunächst, wie der Stand der Technik, eine Aussage über den Temperatur- bzw. Strömungsistwert, wenn gewünscht außerdem, wie der Stand der Technik, dann, wenn der Temperaturbzw. Strömungsistwert den Temperatur- bzw. Strömungsschwellwert unterschreitet und/oder überschreitet, ein Temperatur-bzw. Strömungsfehlersignal, schließlich aber auch, über den Stand der Technik hinausgehend, eine Aussage darüber, wo sich der Temperatur- bzw. Strömungsistwert relativ zum Temperatur- bzw. Strömungsschwellwert befindet.

Im einzelnen gibt es nun verschiedene Möglichkeiten, die erfindungsgemäße Wärmeübergangsmeßeinrichtung bzw. Strömungsmeßeinrichtung auszugestalten und weiterzubilden, was im folgenden nur beispielhaft erläutert werden soll.

Bei der erfindungsgemäßen Wärmeübergangsmeßeinrichtung bzw. Strömungsmeßeinrichtung ist der Temperatur- bzw. Strömungsschwellwert vorzugsweise einstellbar. Dazu empfiehlt es sich, ein Potentiometer, insbesondere ein Mehrgang-Potentiometer vorzusehen.

Die Darstellung des Temperatur- bzw. Strömungsistwertes und des Temperatur-bzw. Strömungsschwellwertes kann bei der erfindungsgemäßen Wärmeübergangsmeßeinrichtung bzw. Strömungsmeßeinrichtung in unterschiedlicher Art und Weise erfolgen, insbesondere sowohl analog als auch digital. Eine diesbezüglich bevorzugte Ausführungsform ist jedoch durch eine digitale Anzeige gekennzeichnet, und zwar dergestalt, daß der Temperatur- bzw. Strömungsistwert und/oder der Temperatur- bzw. Strömungsschwellwert durch eine Leuchtdiodenzeile darstellbar ist bzw. sind. Insbesondere empfiehlt es sich, den Temperatur- bzw. Strömungsistwert und den Temperatur- bzw. Strömungsschwellwert durch eine einzige Leuchtdiodenzeile darzustellen.

Bei einer Ausführungsform der erfindungsgemäßen Wärmeübergangsmeßeinrichtung bzw. Strömungsmeßeinrichtung, bei der zur Darstellung des Temperatur- bzw. Strömungsistwertes und/oder zur Darstellung des Temperatur- bzw. Strömungsschwellwertes eine Leuchtdiodenzeile vorgesehen ist bzw. Leuchtdiodenzeilen vorgesehen sind, empfiehlt sich eine Ausgestaltung derart, daß der Temperatur- bzw. Strömungsistwert und/oder der Temperatur- bzw. Strömungsschwellwert durch von einer aktivierten Diode der Leuchtdiodenzeile bzw. von zwei aktivierten Dioden der Leuchtdiodenzeilen bzw. der Leuchtdiodenzeile abgebbare Lichtimpulse darstellbar ist bzw. sind.

Werden bei der erfindungsgemäßen Wärmeübergangsmeßeinrichtung bzw. Strömungsmeßeinrichtung der Temperatur- bzw. Strömungsistwert und der Temperatur- bzw. Strömungsschwellwert durch eine einzige Leuchtdiodenzeile dargestellt und dabei von zwei aktivierten Dioden der Leuchtdiodenzeile Lichtimpulse abgegeben, so empfiehlt sich als Differenzierung zwischen den Lichtimpulsen für den Temperatur- bzw. Strömungsistwert und den Lichtimpulsen für den Temperatur-bzw. Strömungsschwellwert eine Ausgestaltung derart, daß der Temperatur- bzw. Strömungsistwert durch Lichtimpulse relativ langer Impulsdauer, z. B. 950 ms, und der Temperatur- bzw. Strömungsschwellwert durch Lichtimpulse relativ kurzer Impulsdauer, z. B. 50 ms, darstellbar sind.

Im übrigen geht eine weitere Lehre der Erfindung dahin, der Darstellung des Temperatur- bzw. Strömungsistwertes und/oder der Darstellung des Temperaturbzw. Strömungsschwellwertes einen nicht-linearen, vorzugsweise einen logarithmischen Maßstab zugrundezulegen. Dies kann z. B. dadurch realisiert sein, daß die Auswerteschaltung für den Temperatur- bzw. Strömungsistwert und/oder für den Temperatur- bzw. Strömungsschwellwert einen nicht-linearen, vorzugsweise einen logarithmischen Verstärker bzw. nicht-lineare, vorzugsweise logarithmische Verstärker aufweist.

Bisher ist immer dargestellt worden, daß Temperatur- bzw. Strömungsistwerte und Temperatur- bzw. Strömungsschwellwerte geliefert, eingestellt und dargestellt werden. Es kann jedoch auch vorteilhaft sein, die erfindungsgemäße Wärmeübergangsmeßeinrichtung bzw. Strömungsmeßeinrichtung so auszugestalten, daß die Auswerteschaltung sowohl einen Temperaturistwert als auch einen Strömungsistwert liefert und daß sowohl ein Temperaturschwellwert als auch ein Strömungsschwellwert einstellbar und darstellbar sind. Bei dieser Ausführungsform kann die Anzeigeeinheit z. B. zwei Diodenleisten aufweisen, eine Diodenleiste für den Temperaturistwert und den Temperaturschwellwert und eine Diodenleiste für den Strömungsistwert und den Strömungsschwellwert. Es kann jedoch auch eine Ausführungsform vorteilhaft sein, die dadurch gekennzeichnet ist, daß auf der Anzeigeeinheit wahlweise, z. B. durch einen Umschalter einstellbar, entweder der Temperaturistwert und der Temperaturschwellwert oder der Strömungsistwert und der Strömungsschwellwert darstellbar sind. Schließlich ist auch die Darstellung der Hysterese möglich.

Schließlich geht eine weitere Lehre der Erfindung dahin, bei der erfin-< dungsgemäßen Wärmeübergangsmeßeinrichtung bzw. Strömungsmeßeinrichtung die Temperatur des Wärmeübergangsindikators auf einen konstanten Sollwert zu regeln und aus der für das Konstanthalten der Temperatur des Wärmeübergangsindikators erforderlichen Heizleistung den Strömungsistwert zu gewinnen.

Im folgenden wird die Erfindung anhand einer lediglich ein Ausführungsbeispiel darstellenden Zeichnung weitergehend erläutert; es zeigt

Fig. 1 die Frontansicht der Anzeigeeinheit einer bevorzugten Ausführungsform der erfindungsgemäßen Wärmeübergangsmeßeinrichtung bzw. Strömungsmeßeinrichtung,

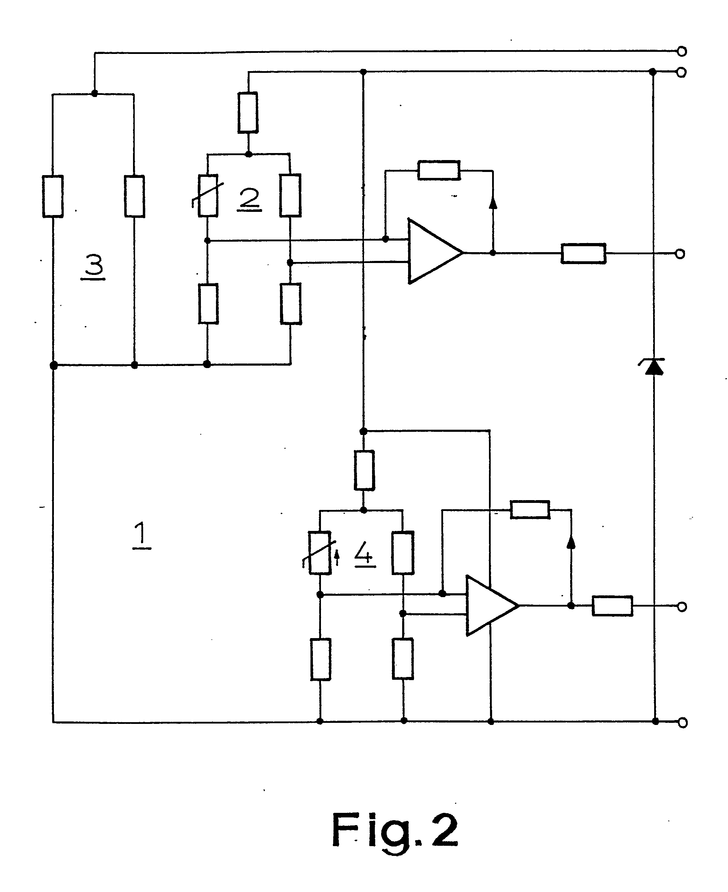

Fig. 2 ein Schaltbild eines Wärmeübergangsindikators einer bevorzugten Ausführungsform der erfindungsgemäßen Wärmeübergangsmeßeinrichtung bzw. Strömungsmeßeinrichtung und

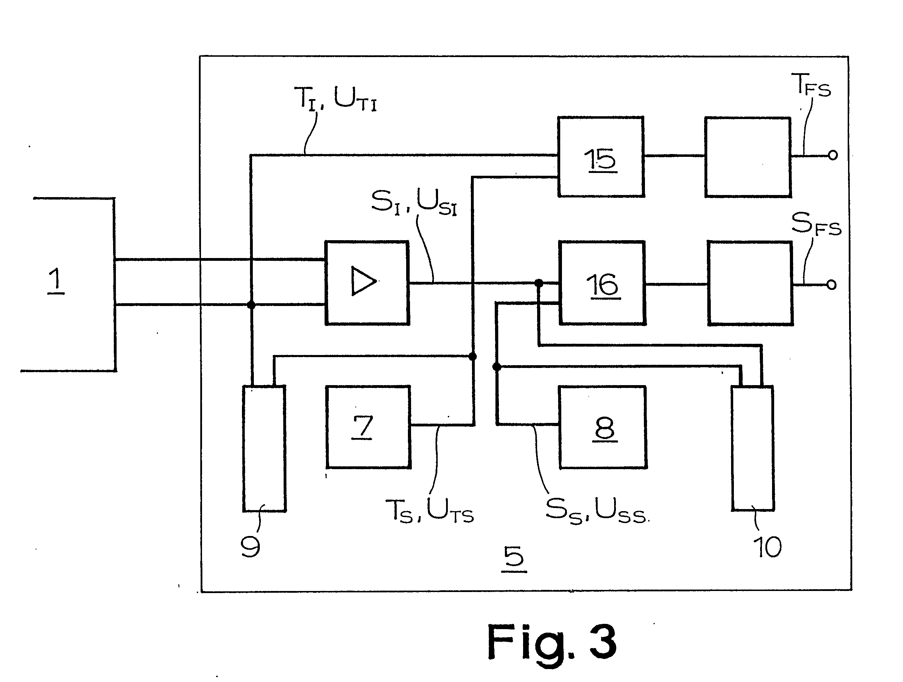

Fig. 3 schematisch, eine Auswerteschaltung einer bevorzugten Ausführungsform der erfindungsgemäßen Wärmeübergangsmeßeinrichtung bzw. Strömungsmeßeinrichtung.

Die in den Figuren - im Zusammenhang - dargestellte Wärmeübergangsmeßeinrichtung bzw. Strömungsmeßeinrichtung besteht in ihrem grundsätzlichen Aufbau aus einem Wärmeübergangsindikator 1, zu dem ein erstes Temperaturmeßelement 2, ein Heizelement 3 und ein zweites Temperaturmeßelement 4 gehören, aus einer Auswerteschaltung 5 und aus einer Anzeigeeinheit 6. Der Wärmeübergangsindikator 1 bzw. die Auswerteschaltung 5 liefern zunächst einen Temperaturistwert $T_I$ (bzw.

eine dem Temperaturistwert $T_I$ proportionale Spannung $U_{TI}$) und einen Strömungsistwert $S_I$ (bzw. eine dem Strömungsistwert $S_I$ proportionale Spannung $U_{SI}$). Durch die Auswerteschaltung 5 ist im übrigen ein Temperaturschwellwert $T_S$ (bzw. eine dem Temperaturschwellwert $T_S$ proportionale Spannung $U_{TS}$) und ein Strömungsschwellwert $S_S$ (bzw. eine dem Strömungsschwellwert $S_S$ proportionale Spannung $U_{SS}$) vorgebbar. Der Temperaturistwert $T_I$ und der Strömungsistwert $S_I$ sind auf der Anzeigeeinheit 6 darstellbar.

Erfindungsgemäß sind der Temperaturschwellwert $T_S$ und der Strömungsschwellwert $S_S$ einstellbar und auf der Anzeigeeinheit 6 darstellbar.

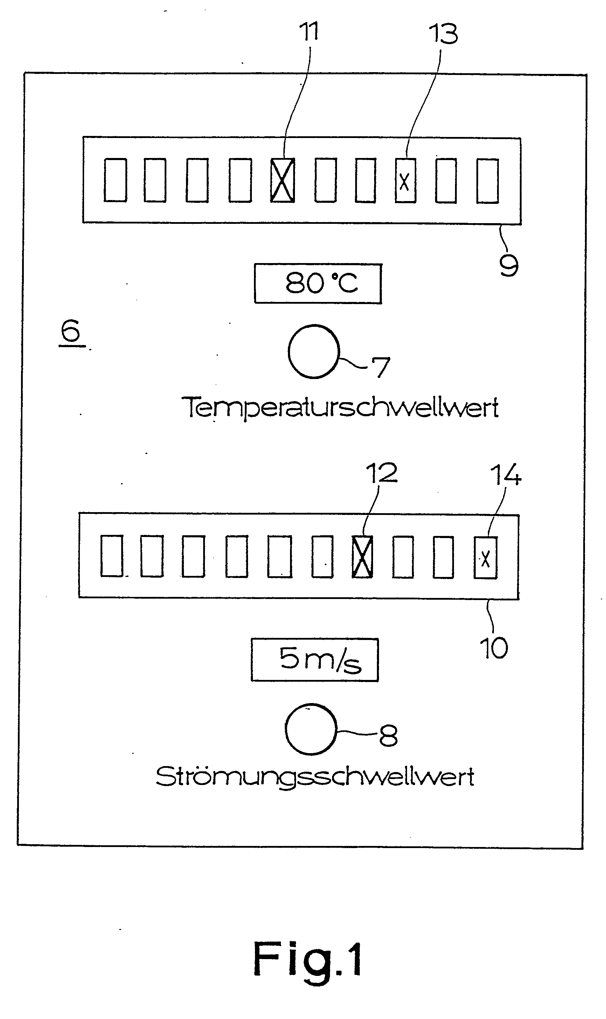

Wie in Fig. 1 angedeutet, sind der Temperaturschwellwert $T_S$ und der Strömungsschwellwert $S_S$ durch ein Mehrgang-Potentiometer 7, 8 einstellbar. Wie der Fig. 1 ebenfalls entnommen werden kann, sind der Temperaturistwert $T_I$ und der Temperaturschwellwert $T_S$ einerseits sowie der Strömungsistwert $S_I$ und der Strömungsschwellwert $S_S$ andererseits jeweils durch eine Diodenzeile 9, 10 darstellbar. Dabei sind der Temperaturistwert $T_I$ und der Temperaturschwellwert $T_S$ durch eine einzige Diodenzeile 9 sowie der Strömungsistwert $S_I$ und der Strömungsschwellwert $S_S$ durch eine einzige Diodenzeile 10 darstellbar. Im übrigen gilt für die dargestellte bevorzugte Ausführungsform, was in den Figuren nicht dargestellt ist, daß der Temperaturistwert $T_I$, der Strömungsistwert $S_I$, der Temperaturschwellwert $T_S$ und der Strömungsschwellwert $S_S$ durch von aktivierten Dioden 11, 12 bzw. 13, 14 der Diodenzeilen 9 bzw. 10 abgebbare Lichtimpulse darstellbar, und zwar der Temperaturistwert $T_I$ und der Strömungsistwert $S_I$ durch Lichtimpulse relativ langer Impulsdauer, z. B. 950 ms, sowie der Temperaturschwell wert $T_S$ und der Strömungsschwellwert $S_S$ durch Lichtimpulse relativ kurzer Impulsdauer, z. B. 50 ms.

Im übrigen zeigen die Figuren insoweit eine bevorzugte Ausführungsform der erfindungsgemäßen Wärmeübergangsmeßeinrichtung bzw. Strömungsmeßeinrichtung, als der Darstellung des Temperaturistwertes $T_I$, des Strömungsistwertes $S_I$, des Temperaturschwellwertes $T_S$ und des Strömungsschwellwertes $S_S$ ein logarithmischer Maßstab zugrundeliegt. Das ist teilweise dadurch realisiert, daß die Auswerteschaltung 5 für den Temperaturistwert $T_I$ und für den Strömungsistwert $S_I$ logarithmische Verstärker 15, 16 aufweist.

Wie die Figuren zeigen, handelt es sich bei der dargestellten bevorzugten Ausführungsform der erfindungsgemäßen Wärmeübergangsmeßeinrichtung bzw. Strömungsmeßeinrichtung um eine solche, bei der die Auswerteschaltung 5 sowohl einen Temperaturistwert $T_I$ als auch einen Strömungsistwert $S_I$ liefert und bei der sowohl ein Temperaturschwellwert $T_S$ als auch ein Strömungsschwellwert

$S_S$ einstellbar und darstellbar sind. Wie bereits ausgeführt, weist nämlich die Anzeigeeinheit 6 zwei Mehrgang-Potentiometer 7, 8 und zwei Diodenzeilen 9, 10 auf. Denkbar ist jedoch auch eine Ausführungsform, die dadurch gekennzeichnet ist, daß auf der Anzeigeeinheit wahlweise, z. B. durch einen Umschalter einstellbar, entweder der Temperaturistwert $T_I$ und der Temperaturschwellwert $T_S$ oder der Strömungsistwert $S_I$ und der Strömungsschwellwert $S_S$ darstellbar sind.

In den Figuren ist nicht dargestellt, daß ein vom Temperaturistwert $T_I$ beim Unterschreiten und/oder überschreiten des Temperaturschwellwertes $T_S$ abgeleitetes Temperaturfehlersignal $T_{FS}$ und ein vom Strömungsistwert $S_I$ beim Unterschreiten und/oder Überschreiten des Strömungsschwellwertes $S_S$ abgeleitetes Strömungsfehlersignal $S_{FS}$ logisch miteinander zu einem Gesamtfehlersignal verknüpft sein können.

Schließlich ist in den Figuren auch nicht dargestellt, daß die Temperatur des Wärmeübergangsindikators 1 auf einen konstanten Sollwert geregelt und aus der für das Konstanthalten der Temperatur des Wärmeübergangsindikators 1 erforderlichen Heizleistung der Strömungsistwert gewonnen wird.

## Ansprüche

1. Wärmeübergangsmeßeinrichtung, insbesondere Strömungsmeßeinrichtung, mit einem Wärmeübergangsindikator, zu dem vorzugsweise ein erstes Temperaturmeßelement, mindestens ein Heizelement und ein zweites Temperaturmeßelement gehören, mit einer Auswerteschaltung und mit einer Anzeigeeinheit, wobei die Auswerteschaltung mindestens einen Temperatur- bzw. Strömungsistwert liefert und durch die Auswerteschaltung mindestens ein Temperatur- bzw. Strömungsschwellwert vorgebbar ist und wobei der Temperatur- bzw. Strömungsistwert auf der Anzeigeeinheit darstellbar ist, **dadurch gekennzeichnet,** daß der Temperatur- bzw. Strömungsschwellwert auf der Anzeigeeinheit darstellbar ist.

2. Wärmeübergangsmeßeinrichtung nach Anspruch 1, dadurch gekennzeichnet, daß der Temperatur- bzw. Strömungsschwellwert vorzugsweise durch ein Potentiometer, insbesondere durch ein Mehrgang-Potentiometer einstellbar oder digital vorgebbar ist.

3. Wärmeübergangsmeßeinrichtung nach Anspruch 1 oder 2, dadurch gekennzeichnet, daß der Temperatur- bzw. Strömungsistwert durch eine Leuchtdiodenzeile oder durch eine LCD-Zeile darstellbar ist.

4. Wärmeübergangsmeßeinrichtung nach einem der Ansprüche 1 bis 3, dadurch gekennzeichnet, daß der Temperatur- bzw. Strömungsschwellwert durch eine Leuchtdiodenzeile oder durch eine LCD-Zeile darstellbar ist.

5. Wärmeübergangsmeßeinrichtung nach Anspruch 3 und 4, dadurch gekennzeichnet, daß der Temperatur- bzw. Strömungsistwert und der Temperatur- bzw. Strömungsschwellwert durch eine einzige Leuchtdiodenzeile oder durch eine einzige LCD-Zeile darstellbar sind.

6. Wärmeübergangsmeßeinrichtung nach einem der Ansprüche 3 bis 5, dadurch gekennzeichnet, daß der Temperatur- bzw. Strömungsistwert und/oder der Temperatur- bzw. Strömungsschwellwert durch von einer aktivierten Diode der Leuchtdiodenzeile bzw. von zwei aktivierten Dioden der Leuchtdiodenzeile bzw. der Leuchtdiodenzeile abgebbare Lichtimpulse oder Licht unterschiedlicher Farbe darstellbar ist bzw. sind.

7. Wärmeübergangsmeßeinrichtung nach Anspruch 5 und 6, dadurch gekennzeichnet, daß der Temperatur- bzw. Strömungsistwert durch Lichtimpulse relativ langer Impulsdauer, z. B. 950 ms, und der Temperatur- bzw. Strömungsschwellwert durch Lichtimpulse relativ kurzer Impulsdauer, z. B. 50 ms darstellbar sind (oder umgekehrt).

8. Wärmeübergangsmeßeinrichtung nach einem der Ansprüche 1 bis 7, dadurch gekennzeichnet, daß der Darstellung des Temperatur- bzw. Strömungsistwertes und/oder der Darstellung des Temperatur- bzw. Strömungsschwellwertes ein nicht-linearer, vorzugsweise ein logarithmischer Maßstab zugrundeliegt.

9. Wärmeübergangsmeßeinrichtung nach Anspruch 8, dadurch gekennzeichnet, daß die Auswerteschaltung für den Temperatur- bzw. Strömungsistwert und/oder für den Temperatur- bzw. Strömungsschwellwert einen nicht-linearen, vorzugsweise einen logarithmischen Verstärker bzw. nicht-lineare, vorzugsweise logarithmische Verstärker bzw. eine digitale Verarbeitung aufweist.

10. Wärmeübergangsmeßeinrichtung nach einem der Ansprüche 1 bis 9, dadurch gekennzeichnet, daß die Auswerteschaltung sowohl einen Temperaturistwert als auch einen Strömungsistwert liefert und daß sowohl ein Temperaturschwellwert als auch ein Strömungsschwellwert einstellbar und darstellbar sind.

11. Wärmeübergangsmeßeinrichtung nach Anspruch 10, dadurch gekennzeichnet, daß auf der Anzeigeeinheit wahlweise, z. B. durch einen Umschalter einstellbar, entweder der Temperaturistwert und der Temperaturschwellwert oder der Strömungsistwert und der Strömungsschwellwert darstellbar bzw. extern programmierbar sind.

12. Wärmeübergangsmeßeinrichtung nach Anspruch 10 oder 11, dadurch gekennzeichnet, daß ein vom Temperaturistwert beim Unterschreiten und/oder Überschreiten des Temperaturschwellwertes abgeleitetes Temperaturfehlersignal und ein vom Strömungsistwert beim Unterschreiten und/oder Überschreiten des Strömungsschwellwertes abgeleitetes Strömungsfehlersignal logisch miteinander zu einem Gesamtfehlersignal verknüpft sind und ggf. angezeigt werden.

13. Wärmeübergangsmeßeinrichtung nach einem der Ansprüche 1 bis 12, dadurch gekennzeichnet, daß der Temperatur- bzw. Strömungsistwert und der Temperatur-bzw. Strömungsschwellwert gekoppelt und elektronisch verarbeitet werden, z. B. mit Mikroprozessoren, - so daß eine Korrektur möglich und/oder eine eventuelle Fehlfunktion, z. B. eine Überhitzung, erkennbar wird.

14. Wärmeübergangsmeßeinrichtung, insbesondere Strömungsmeßeinrichtung, mit einem Wärmeübergangsindikator, zu dem vorzugsweise ein erstes Temperaturmeßelement, mindestens ein Heizelement und ein zweites Temperaturmeßelement gehören, mit einer Auswerteschaltung und mit einer Anzeigeeinheit, wobei die Auswerteschaltung mindestens einen Temperatur- bzw. Strömungsistwert liefert und durch die Auswerteschaltung mindestens ein Temperatur- bzw. Strömungsschwellwert vorgebbar ist und wobei der Temperatur- bzw. Strömungsistwert auf der Anzeigeeinheit darstellbar ist, insbesondere nach einem der Ansprüche 1 bis 13, **dadurch gekennzeichnet**, daß die Temperatur des Wärmeübergangsindikators auf einen konstanten Sollwert geregelt und aus der für das Konstanthalten der Temperatur des Wärmeübergangsindikators erforderlichen Heizleistung der Strömungsistwert gewonnen wird.

80°C

Temperaturschwellwert

5m/s

Strömungsschwellwert

Fig.1

# Fig. 2

Fig. 3

EP 0 330 915 A2